# EUROPÄISCHE PATENTSCHRIFT

(11) **EP 2 732 902 B1**
(45) Veröffentlichungstag und Bekanntmachung des Hinweises auf die Patenterteilung: **03.05.2017**
(21) Anmeldenummer: 12193030.9
(22) Anmeldetag: 16.11.2012
(51) Int. Cl.: B23K 10/00, B23K 9/013

(54) **Verfahren zum Plasmaschneiden von Werkstücken mit einem geneigten Plasmastrahl**
Method of plasma cutting of workpieces with an inclined plasma beam
Procédé de coupage au plasma de pièces avec un faisceau plasma incliné

(43) Veröffentlichungstag der Anmeldung: 21.05.2014
(73) Patentinhaber: Kjellberg-Stiftung, 03238 Finsterwalde (DE)
(72) Erfinder: Laurisch, Frank, 03238 Finsterwalde (DE); Krink, Volker, 03238 Finsterwalde (DE)
(74) Vertreter: Pfenning, Meinig & Partner mbB

(56) Entgegenhaltungen:
- DE-A1-102005 039 070
- JP-A- S 542 245
- JP-A- 2001 234 633
- JP-A- 2003 136 247
- KR-A- 20050 018 027

## Beschreibung

Die Erfindung betrifft ein Verfahren zum Plasmaschneiden von Werkstücken gemäß dem Oberbegriff des Anspruchs 1 (siehe, z.B., JP 2003 136247 A). Als Plasma wird ein thermisch hoch aufgeheiztes elektrisch leitfähiges Gas bezeichnet, das aus positiven und negativen Ionen, Elektronen sowie angeregten und neutralen Atomen und Molekülen besteht.

Als Plasmagas werden unterschiedliche Gase, z.B. das einatomige Argon und/oder die zweiatomigen Gase Wasserstoff, Stickstoff, Sauerstoff oder Luft eingesetzt. Diese Gase ionisieren und dissoziieren durch die Energie des Plasmalichtbogens.

Der Plasmastrahl kann in seinen Parametern durch die Gestaltung der Düse und Elektrode stark beeinflusst werden. Diese Parameter des Plasmastrahls sind z.B. der Strahldurchmesser, die Temperatur, Energiedichte und die Strömungsgeschwindigkeit des Gases.

Beim Plasmaschneiden beispielsweise wird das Plasma durch eine Düse, die gas- oder wassergekühlt sein kann, eingeschnürt. Dazu verfügt die Düse über eine Düsenbohrung, durch die der Plasmastrahl strömt. Dadurch können Energiedichten bis 2 × 10⁶ W/cm² erreicht werden. Im Plasmastrahl treten Temperaturen bis 30.000°C auf, die in Verbindung mit der hohen Strömungsgeschwindigkeit des Gases sehr hohe Schneidgeschwindigkeiten an allen elektrisch leitfähigen Werkstoffen realisieren.

Das Plasmaschneiden ist heute ein etabliertes Verfahren zum Schneiden elektrisch leitender Werkstoffe, wobei je nach Schneidaufgabe unterschiedliche Gase und Gasgemische eingesetzt werden.

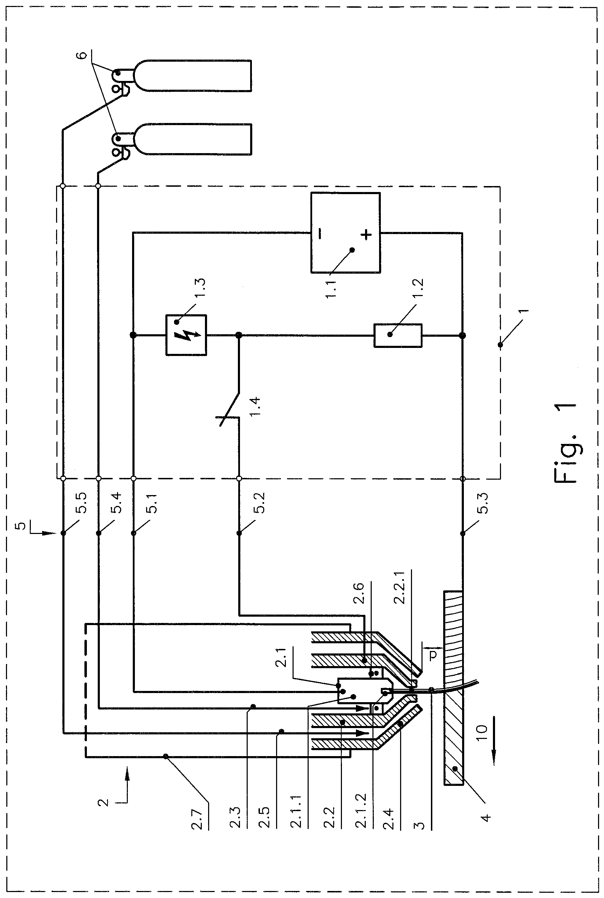

Eine herkömmliche Anordnung zum Plasmaschneiden ist in **Fig. 1** dargestellt. Dabei fließt der elektrische Schneidstrom von der Stromquelle 1 zum Plasmaschneidbrenner 2 über seine Elektrode 2.1 den von der Düse 2.2 und der Düsenbohrung 2.2.1 eingeschnürten Plasmastrahl 3 zum Werkstück 4 und dann zurück zur Stromquelle 1.

Der Plasmaschneidbrenner 2 besteht im Wesentlichen aus dem Plasmabrennerkopf mit einem Strahlerzeugungssystem, bestehend aus der Elektrode 2.1, der Düse 2.2 der Gaszuführung 2.3 und dem Brennerkörper, der die Zuführung der Medien (Gas, Kühlwasser und elektrischen Strom) realisiert und das Strahlerzeugungssystem aufnimmt. Zusätzlich kann um die Düse 2.2 des Plasmaschneidbrenners 2 eine Sekundärgaskappe 2.4 zur Zuführung eines Sekundärmediums, z.B. einem Gas, angebracht sein. Bei der Elektrode 2.1 des Plasmaschneidbrenners 2 handelt es sich um eine nicht abschmelzende Elektrode 2.1, die im Wesentlichen aus einem Hochtemperaturwerkstoff, wie z.B. Wolfram, Zirkonium oder Hafnium besteht und dadurch eine sehr lange Lebensdauer hat. Oft ist besteht die Elektrode 2.1 aus zwei Teilen mit einander verbundenen Teilen, dem Elektrodenhalter 2.1.1, der aus gut elektrisch und wärmeleitendem Material (z. B. Kupfer, Silber, Legierungen daraus) und einem hochschmelzenden Emissionseinsatz 2.1.2 mit geringer Elektronenaustrittsarbeit (Hafnium, Zirkonium, Wolfram) gebildet ist. Die Düse 2.2 besteht meist aus Kupfer und schnürt den Plasmastrahl 3 ein. Zwischen der Elektrode 2.1 und der Düse 2.2 kann eine Gasführung für das Plasmagas, die das Plasmagas in Rotation versetzt, angeordnet sein. Die Position des Plasmaschneidbrenners 2, aus der der Plasmastrahl 3 aus der Düse 2.2 oder der Sekundärgaskappe 2.4 austritt, wird als Plasmabrennerspitze bezeichnet.

Für den Schneidprozess wird zunächst ein Pilotlichtbogen, der zwischen Elektrode 2.1 und Düse 2.2 mit geringem elektrischen Strom (z.B. 10 A-30 A) und damit geringer Leistung brennt, z.B. mittels elektrischer Hochspannung, die durch das Hochspannungszündgerät 1.3 erzeugt wird, gezündet. Der Strom des Pilotlichtbogens wird durch den elektrischen Widerstand 1.2 begrenzt. Dieser energiearme Pilotlichtbogen bereitet durch teilweise Ionisation die Strecke zwischen Plasmaschneidbrenner2 und Werkstück 4 für den Schneidlichtbogen vor. Berührt der Pilotlichtbogen das Werkstück 4, kommt es durch den vom elektrischen Widerstand 1.2 erzeugten elektrischen Potentialunterschied zwischen Düse 2.2 und Werkstück 4 zur Ausbildung des Schneidlichtbogens. Dieser brennt dann zwischen der Elektrode 2.1 und dem Werkstück 4 mit meist größerem elektrischen Strom (z.B. 20 A-900 A) und damit auch größerer Leistung. Der Schaltkontakt 1.4 wird geöffnet und die Düse 2.2 von der Stromquelle 1.1 potentialfrei geschaltet. Diese Betriebsweise wird auch als direkte Betriebsweise bezeichnet. Dabei wird das Werkstück 4 der thermischen, kinetischen und elektrischen Wirkung des Plasmastrahls 3 ausgesetzt. Dadurch ist das Verfahren sehr effektiv und es können Metalle bis zu großen Dicken, z.B. 180 mm bei 600 A Schneidstrom mit einer Schneidgeschwindigkeit von 0,2 m/min geschnitten werden.

Dazu wird der Plasmaschneidbrenner 2 mit einem Führungssystem relativ zu einem Werkstück bzw. seiner Oberfläche bewegt. Dies kann z. B. ein Roboter oder eine CNC-gesteuerte Führungsmaschine sein. Die Steuerung des Führungssystems (nicht dargestellt) kommuniziert mit der Anordnung nach Fig. 1. Im einfachsten Fall startet und beendet es den Betrieb des Plasmaschneidbrenners 2. Nach dem heutigen Stand der Technik können jedoch eine Vielzahl von Signalen und Informationen, z. B. über Betriebszustände und Daten ausgetauscht werden.

Beim Plasmaschneiden können hohe Schnittqualitäten erreicht werden. Kriterien dafür sind beispielsweise eine geringe Rechtwinkligkeits- und Neigungstoleranz nach DIN ISO 9013. Beim Einhalten der optimalen Schneidparameter, dazu gehören unter anderem der elektrische Schneidstrom, die Schneidgeschwindigkeit, der Abstand zwischen dem Plasmaschneidbrenner und dem Werkstück sowie der Gasdruck, können glatte Schnittflächen und bartfreie Kanten erreicht werden.

Für die Qualität des Schnittes ist es auch wichtig, dass die Elektrode 2.1, insbesondere deren Emissionseinsatz 2.1.2 und die Düse 2.2, insbesondere deren Düsenbohrung 2.2.1 auf einer gemeinsamen Achse liegen, um in jeder Bewegungsrichtung des Plasmaschneidbrenners 2 relativ zum Werkstück eine gleiche oder zumindest nur gering abweichende Rechtwinkligkeits- und Neigungstoleranz an den unterschiedlichen Schnittkanten zu erhalten.

Beim Plasmaschneiden sind heute Rechtwinkligkeits- und Neigungstoleranzen der Güte 2 bis 4 nach der DIN ISO 9013 Stand der Technik. Dies entspricht einem Winkel von bis zu 3°.

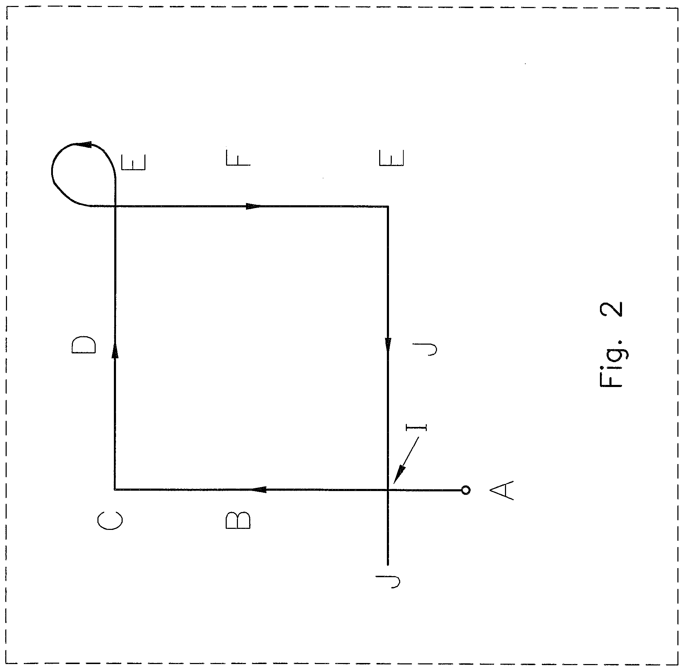

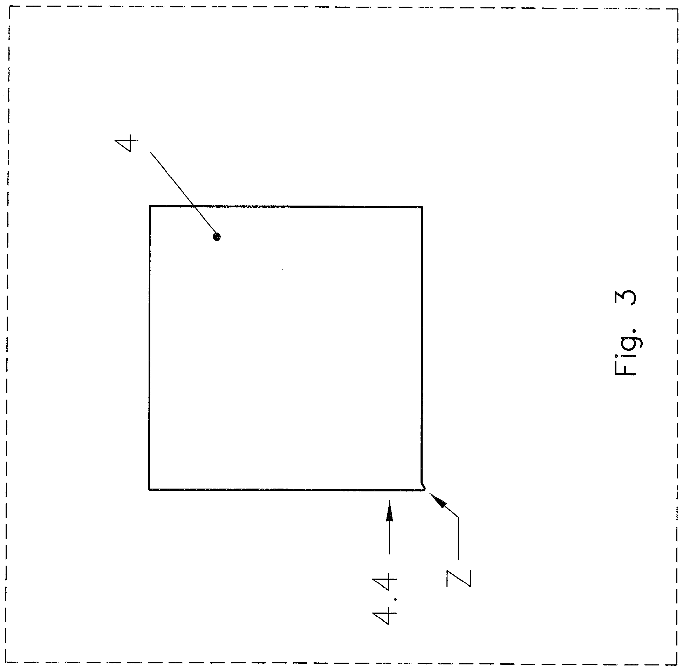

**Fig. 2** zeigt schematisch die Konturführung eines Plasmaschneidbrenners 2 zum Schneiden einer Kontur aus einem Werkstück 4 aus Sicht von oben auf das Werkstück 4. Hier soll ein Viereck geschnitten werden. Abschnitt A ist dabei der Schneidbeginn. Es wird dort in das Werkstück 4 mit dem Plasmastrahl 3 eingestochen. Nach dem Durchstechen wird die mit Pfeil gekennzeichnete Vorschubbewegungsrichtung im Abschnitt B beim Vorschub des Plasmastrahls 3 berücksichtigt. Danach folgt der Abschnitt C, der eine zu schneidende Ecke ist. Hierzu muss das Führungssystem die Bewegung im Abschnitt C abbremsen und anschließend bei einer Weiterbewegung wieder in Richtung Abschnitt D beschleunigen. Oft wird keine "scharfe" Ecke, sondern ein kleiner Radius, z. B. 1 mm gefahren, damit der Plasmaschneidbrenner 2 nicht, wie in der scharfen Ecke, bei plötzlicher Vorschubbewegungsrichtungsänderung stehen bleiben muss, bevor wieder ein gerader Abschnitt D geschnitten wird. So kann die Vorschubbewegungsrichtung kontinuierlich und "sanft" geändert werden. Nachteilig ist hier eine entstehende leichte Rundung im Bereich der Ecke des Abschnitts C des geschnittenen Werkstücks 4. Eine scharfkantige Ecke erhält man, wenn der Plasmaschneidbrenner 2, wie im Bereich der Ecke im Abschnitt E geführt wird. Hier verlässt der Plasmaschneidbrenner 2, wie in Fig. 2 dargestellt, die Kontur des zu schneidenden Werkstücks 4 und wird über das "Abfallteil" geführt, um dann wieder mit seiner Vorschubbewegung auf die Kontur des zu schneidenden Werkstücks 4 zurückzukehren. Dies wird auch "umfahrene Ecke" genannt. Die Vorschubgeschwindigkeit des Plasmaschneidbrenners 2 kann so bei der Vorschubbewegung entlang der zu schneidenden Kontur des zu schneidenden Werkstücks 4 konstant gehalten werden und muss nicht wegen der erforderlichen Vorschubbewegungsrichtungsänderungen verändert werden. Nachteilig ist dabei der größere Verschnitt an Material, der besonders dann störend ist, wenn auszuschneidende Werkstücke 4 dicht nebeneinander angeordnet sein sollen. Nach dem Schneiden der Geraden im Abschnitt F, dem Schneiden der Ecke im Abschnitt G und dem Schneiden der Geraden im Abschnitt H wird der Plasmaschneidbrenner 2 zunächst die durch die Schnittfuge erzeugte Werkstückkante 4.4 und dann die Schnittfuge des Abschnitts B überfahren. Dieser Bereich ist hier mit I bezeichnet. Danach wird der Schneidprozess im Abschnitt J beendet. Beim Überfahren der Werkstückkante 4.4 und der nachfolgenden Schnittfuge kommt es zur Ausbildung eines aus der übrigen Schnittfläche des Abschnittes H hervorstehenden Bereiches Z (Fig. 3). Hierdurch wird die Qualität des geschnittenen Werkstücks 4 erheblich verschlechtert, diese Stelle muss, z. B. durch Schleifen nachbearbeitet werden.

**Fig. 3** zeigt schematisch die entstandene Kontur des geschnittenen Werkstücks 4 in der Ansicht von oben, entsprechend Fig. 2. Der aus der übrigen Schnittfläche 4.2 hervorstehenden Bereich ist mit Z bezeichnet.

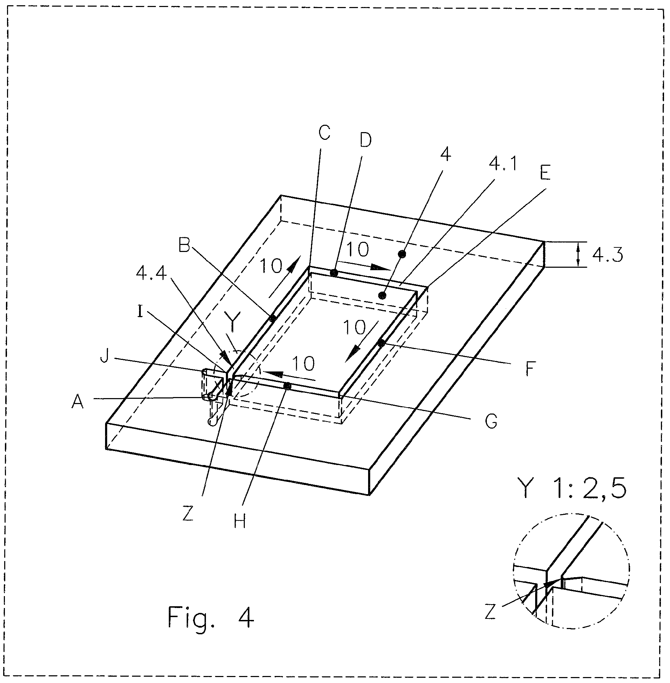

**Fig. 4** zeigt eine perspektivische Ansicht eines geschnittenen Werkstücks 4, das ähnlich wie in Fig. 2 und 3 dargestellt, geschnitten wurde. Lediglich die Ecke im Abschnitt E, wurde anders, nämlich wie die Ecken der Abschnitte C und G geschnitten. Auch hier entsteht der hervorstehende Bereich Z beim Überfahren der Werkstückkante 4.4.

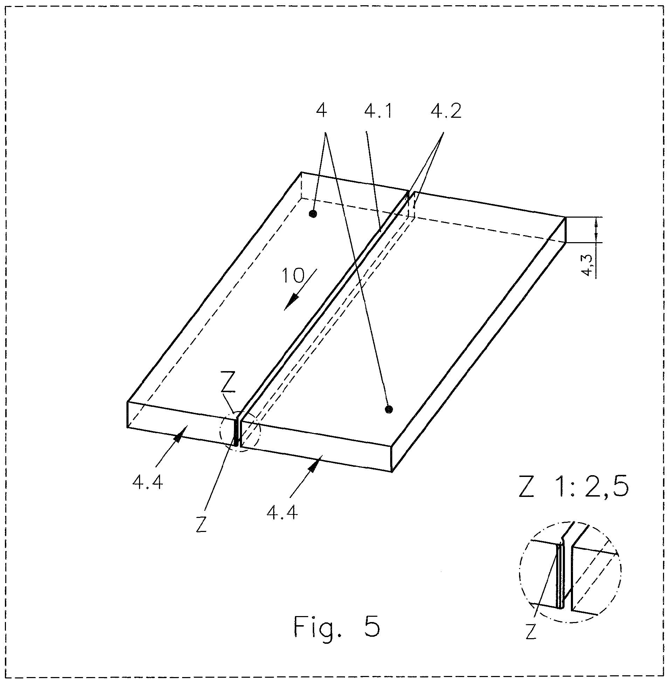

**Fig. 5** zeigt beispielhaft eine perspektivische Ansicht eines geradlinigen Schnittes, wie er zum Abschneiden oder Besäumen von Werkstücken 4 vorgenommen wird. Hier wird die Werkstückkante 4.4 nicht wie beim Konturenschneiden durch die Schnittfuge, sondern durch das Ende des Werkstücks 4 gebildet. Auch hier entsteht der hervorstehende Bereich Z beim Überfahren der Werkstückkante 4.4.

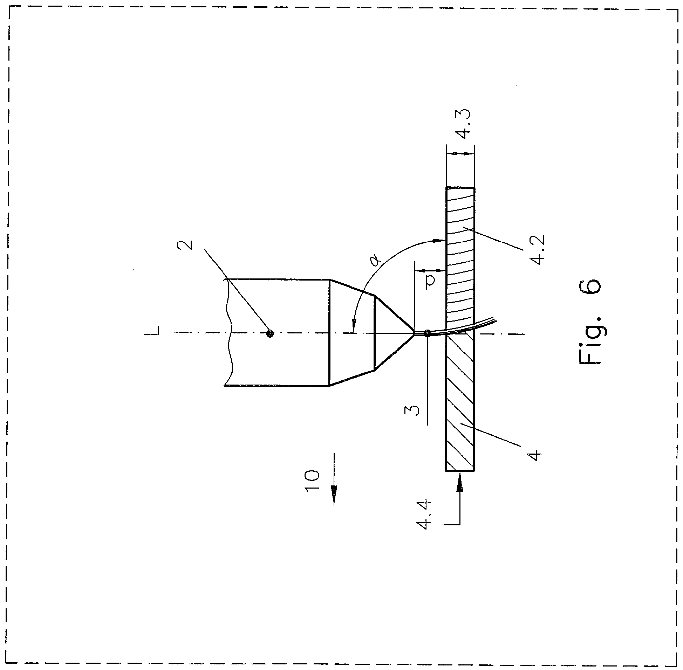

**Fig. 6** zeigt, wie ein Plasmaschneidbrenner 2 im Abstand d zum Werkstück 4 positioniert ist und geführt wird. In der Regel ist der Plasmaschneidbrenner 2 senkrecht (α = 90°) zur Werkstückoberfläche ausgerichtet, um möglichst senkrechte Schnittflächen zu erreichen.

Es gibt auch Vorrichtungen, die einen Plasmaschneidbrenner neigen, um gezielt schräge Schnittflächen zu erzeugen. Diese Schnitte werden Fasenschnitte genannt und werden benötigt, um z.B. Bleche nach dem Schneiden zu verschweißen. Hier werden unterschiedliche Winkel (10° bis 60°) und Formen (V, K, Y-Form) an der Schnittkante erzeugt. Dazu wird der Plasmaschneidbrenner 2 in senkrechter Richtung zu seiner Vorschubbewegungsrichtung 10 im gewünschten Winkel geneigt.

Ein Plasmaschneidbrenner 2 soll oft mit einer möglichst hohen Vorschubgeschwindigkeit geführt werden soll, so dass der Plasmastrahl 3 durch das Werkstück 4 entgegen der Vorschubbewegungsrichtung 10 des Plasmaschneidbrenners 2 abgelenkt wird.
Der Plasmastrahl 3 "läuft nach". Dies führt zu einer hohen Produktivität und damit zur Kostenreduzierung. Ein leicht nachlaufender Plasmastrahl 3 reduziert auch die Bartbildung an der Unterseite des Werkstücks 4.

Wird hier die Vorschubgeschwindigkeit so gewählt, dass der Plasmastrahl 3 nahezu senkrecht oder gar vorlaufend durch das Werkstück 4 dringt, kommt es oft zur Bartbildung an der Unterseite des Werkstücks 4. Dieser Bart kann meist nur mit hohem Aufwand entfernt werden, er haftet fest an. Dies tritt besonders bei hochlegierten, aber auch bei niedrig- und unlegierten Stählen auf. Meist ist der Bart bei diesen etwas leichter entfernbar.

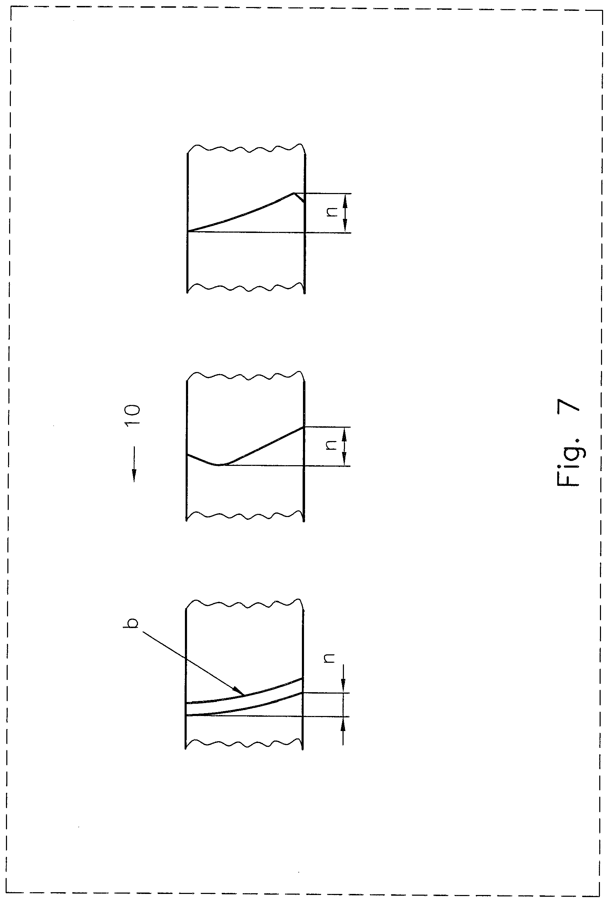

In **Fig. 7** sind die beim Schneiden an der Schnittfläche 4.2 entstehenden Rillen 4.3, die durch die Ablenkung des Plasmastrahls 3 nachlaufen, dargestellt. Der größte Abstand zweier Punkte einer Schnittrille in Schneidrichtung wird nach DIN ISO 9013 Rillennachlauf n genannt.

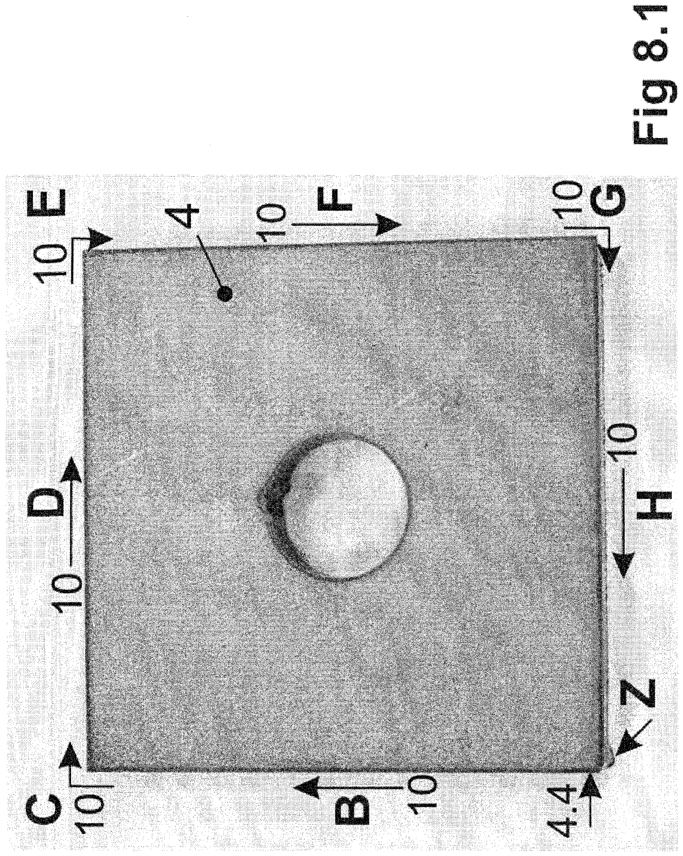

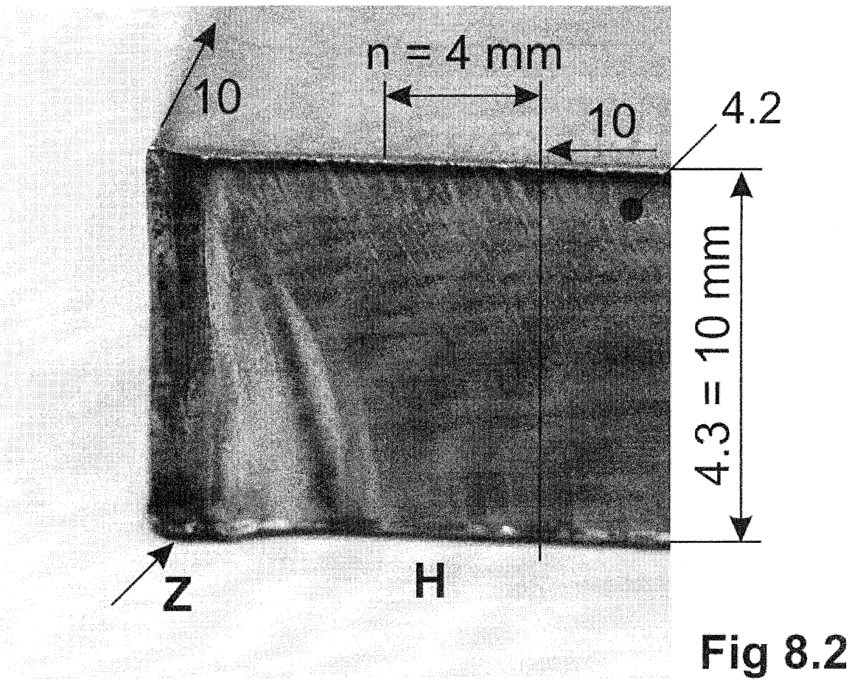

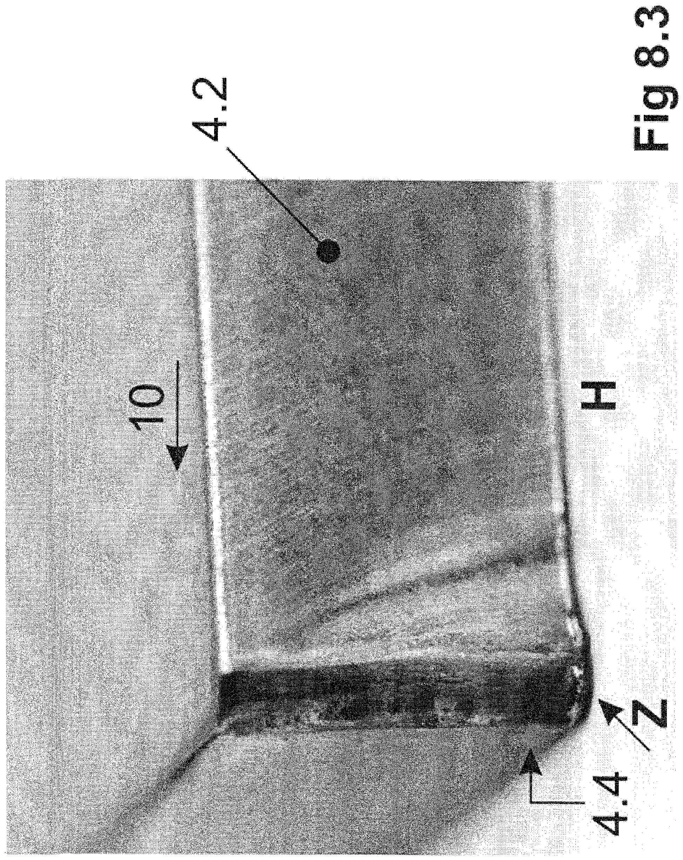

Die **Fig. 8.1 bis 8.3** zeigen Fotografien eines Werkstücks 4 aus Stahl mit einer Dicke 4.3 von 10 mm. Fig. 8.1 ist die Ansicht von oben auf das Werkstück 4 und Fig. 8.2 zeigt die Teilansicht des Abschnittes H sowie den beim Überfahren der Werkstückkante 4.4 entstandenen hervorstehenden Bereich Z. Weiterhin sind Rillen der Schnittfläche 4.2 sowie der Rillennachlauf n = 4 mm gut zu erkennen. Die perspektivische Ansicht Fig. 8.3 verdeutlicht nochmals das Problem der hervorstehenden Bereiches Z.

Beim Überfahren einer Werkstückkante 4.4 (z. B. Schnittkante einer Schnittfuge oder das Ende eines Werkstücks 4) kommt es zur Bildung eines gegenüber der restlichen Schnittfläche 4.2 hervorstehenden Bereichs Z. Der anodische Ansatzpunkt des Plasmastrahls 3 auf dem Werkstück 4 "überspringt" sozusagen das letzte Stück der Kontur vor der Werkstückkante 4.4. Schlimmstenfalls bleibt sogar ein Rest stehen und das Werkstück 4 wurde nur unvollständig geschnitten.

Es wurde versucht, diesen Effekt durch Verringerung der Schneidgeschwindigkeit zu reduzieren. Dies führt jedoch nicht zum erwünschten Ergebnis. Bei zu langsamer Vorschubgeschwindigkeit wird zu viel Material abgetragen. Dabei kann der Plasmastrahl 3 "abreißen", weil sein Ansatzpunkt im Werkstück 4 abgetragen wurde oder die Schnittkante kann ausspülen.

Durch Versuche konnte keine Vorschubgeschwindigkeitsreduzierung ermittelt werden, die ein optimales Schnittende an einer Werkstückkante erzeugt. Entweder ragte der letzte Bereich aus der Schnittfläche hervor oder es wurde zu viel Material abgetragen.

Aus JP 2003 327055 A und JP S54 2245 A sowie KR 2005 0018027 A sind Plasmaschneidverfahren bekannt, bei dem eine Neigung eingehalten werden kann.

Es ist daher Aufgabe der Erfindung Möglichkeiten anzugeben, mit denen beim Plasmaschneiden verbesserte Schnittflächen erreicht werden, die keine zumindest nur eine reduzierte Nachbearbeitung erfordern.

Erfindungsgemäß wird diese Aufgabe mit einem Verfahren, das die Merkmale des Anspruchs 1 aufweist, gelöst. Vorteilhafte Ausgestaltungen und Weiterbildungen können mit in untergeordneten Ansprüchen bezeichneten Merkmalen erreicht werden.

Das Problem wird durch Neigung oder Ablenkung des Plasmastrahls in Richtung seiner Vorschubbewegungsrichtung gelöst.

Es wird ein Plasmaschneidbrenner mit zumindest einem Brennerkörper, einer Elektrode und einer Düse, eingesetzt. Der Plasmastrahl wird zumindest vor dem Überfahren einer Werkstückkante in einem Winkel δ in Bezug zur senkrecht zur Werkstückoberfläche ausgerichteten Achse geneigt oder abgelenkt, so dass die Austrittsposition des Plasmastrahls aus dem Werkstück in Vorschubbewegungsrichtung in einem maximal halb so großen Abstand angeordnet ist, als dies bei senkrecht zur Werkstückoberfläche auftreffendem Plasmastrahl der Fall wäre.

Die Austrittsposition aus dem Werkstück in Vorschubbewegungsrichtung kann aber auch zumindest in der Achse in der auch die Auftreffposition des Plasmastrahls auf der Werkstückoberfläche angeordnet ist, liegen. Besonders bevorzugt kann sie in Vorschubachsrichtung davor angeordnet sein. Dabei kann beachtet werden, ob sich durch die Neigung oder Auslenkung des Plasmastrahls die Auftreffposition des Plasmastrahls auf der Werkstückoberfläche durch die Neigung oder Auslenkung, gegenüber einem senkrecht auf die Werkstückoberfläche gerichteten Plasmastrahl verändert oder dies nicht der Fall ist. Bei gleicher Auftreffposition kann der bereits erwähnte halb so große Abstand bereits ausreichend sein, um den gewünschten Effekt erreichen zu können.

Die Neigung oder Auslenkung sollte beibehalten werden, bis der Schnitt vollständig erfolgt, eine Ecke oder ein Radius ausgebildet worden ist. In Bereichen bei denen ein geradliniger Schnitt oder eine Schnittkontur mit größeren Radien ausgebildet wird, sollte der Plasmastrahl vollständig senkrecht zur Werkstückoberfläche ausgerichtet sein, was auf alle Achsen zutrifft, also sowohl die parallel zur Vorschubbewegungsrichtung ausgerichtete Achse, wie auch dazu in einem Winkel ausgerichtete Achsen berücksichtigt und auch dort ein senkrechter Winkel eingehalten ist.

Bei der Ablenkung oder Neigung des Plasmastrahls in Bezug zur Werkstückoberfläche sollte ein Winkel δ von mindestens 5° bis maximal 45°, bevorzugt mindestens 15° in Vorschubbewegungsrichtung des Plasmaschneidbrenners eingehalten werden.

Die Neigung oder Auslenkung des Plasmastrahls soll vor dem Überfahren einer Werkstückkante oder ggf. auch der Ausbildung einer Ecke oder eines Radius einer Schneidkontur durchgeführt werden. Dies soll gemäß der Erfindung spätestens jedoch dann durchgeführt werden, wenn die Eintrittsposition des Plasmastrahls in die Werkstückoberfläche die Position erreicht hat, bei der der Abstand zur Werkstückkante nicht mehr als 25% des Maßes der Werkstückdicke 4.3 entspricht.

Die Auslenkung oder Neigung des Plasmastrahls kann beim Schneiden von Konturen frühestens während oder nach der letzten Vorschubbewegungsrichtungsänderung, insbesondere nach Ausbildung einer Ecke oder Ausbildung eines Radius, durchgeführt werden. Dadurch können unkritische im Wesentlichen geradlinige oder leicht gekrümmte Bereiche einer Schneidkontur in herkömmlicherweise geschnitten werden.

Es besteht auch die Möglichkeit, die Auslenkung oder Neigung des Plasmastrahls zumindest bis zum Passieren der Werkstückkante beizubehalten. Beim Überfahren einer Schnittfuge sollte die Neigung oder Auslenkung bevorzugt beibehalten werden, bis frühestens der Plasmastrahl eine Position erreicht hat, bei der der Plasmastrahl das Werkstück berührt und diese Position einen Abstand zur Werkstückkante hat, der 25% des Maßes der Werkstückdicke entspricht oder bis zu der der Schneidlichtbogen verloschen ist. Ein Erlöschen des Plasmastrahls erfolgt üblicherweise nachdem der Plasmastrahl eine Werkstückkante beim Schneiden erreicht hat und dann der zwischen Brenner und Werkstück ausgebildete Lichtbogen erlischt.

Der Plasmastrahl kann um mindestens die Hälfte des Maßes des größten Abstandes n zweier Punkte einer Rille b (Rillennachlauf) in Vorschubbewegungsrichtung, bevorzugt um das Maß des größten Abstandes n zweier Punkte einer Rille b (Rillennachlauf) geneigt oder abgelenkt werden. Der Abstand ist dabei der Abstand zwischen der Positionen des Plasmastrahls beim Auftreffen auf die Werkstückoberfläche bei der senkrecht zur Werkstückoberfläche ausgerichteten Längsachse des Plasmaschneidbrenners und der geneigt ausgerichteten Längsachse des Plasmaschneidbrenners oder bei ausgelenktem Plasmastrahl, wenn die Spitze des Brenners (stirnseitiges Ende der Bohrung der Düse) sich an der entsprechend gleichen Position angeordnet sein würde.
Es kann sich aber auch um den Abstand der Spitze des Brenners parallel zur Werkstückoberfläche handeln, der sich durch die Neigung oder Auslenkung des Plasmastrahls ergibt.

Die Neigung des Plasmastrahls während der Durchführung des erfindungsgemäßen Verfahrens in den erwähnten kritischen Bereichen kann durch Neigung der Längsachse der Düsenbohrung und/oder der Düse des Plasmabrenners erreicht werden. Bevorzugt sollte die Neigung durch ein Verschwenken des gesamten Plasmaschneidbrenners erreicht werden.

Die Neigung des Plasmaschneidbrenners sollte um eine Position des Plasmastrahls zwischen der Spitze des Plasmaschneidbrenners und der Position an der dieser auf die Oberfläche des Werkstücks trifft, durchgeführt werden.

Die Neigung des Plasmaschneidbrenners kann auch um den Position, an der der Plasmastrahl auf die Oberfläche des Werkstücks trifft, durchgeführt werden.

Eine Neigung des Plasmastrahls ist auch durch eine Verschiebung der Düse und/oder der Düsenbohrung gegenüber der Elektrode und/oder dem Emissionseinsatz eines Brenners in Vorschubbewegungsrichtung des Plasmaschneidbrenners erreichbar.

Eine Ablenkung eines Plasmastrahls kann magnetisch erfolgen. Hierfür kann in den kritischen Bereichen einer Schnittfuge der Plasmastrahl durch den Einsatz mindestens eines Permanent- oder Elektromagneten in die gewünschte Richtung abgelenkt werden. Der Verlauf des Plasmastrahls im Bereich seiner Spitze wird dadurch gekrümmt. Ein Permanent- oder Elektromagnet kann in den kritischen Bereichen in die Nähe des Plasmastrahls bewegt und mittels der Feldlinien eine gewünschte Auslenkung erreicht werden.

Bei Einsatz eines oder mehrerer Elektromagnete kann dies auch durch ein Ein- und späteres wieder Ausschalten oder durch eine Erhöhung und Verringerung der Feldstärke erreicht werden.

Bei dem erfindungsgemäßen Verfahren kann ein Signal, dass der Plasmastrahl in Vorschubbewegungsrichtung des Plasmaschneidbrenners zur Werkstückoberfläche geneigt oder abgelenkt werden soll, von einem Führungssystem, mit dem der Plasmaschneidbrenner geführt wird und/oder dessen Steuerung bereitgestellt werden. Solche Signale können an eine mechanische Neigungseinheit, den Plasmaschneidbrenner oder eine magnetische Ablenkeinrichtung übertragen werden wodurch die Neigung oder Ablenkung des Plasmastrahls erreicht werden kann, wenn dies beim Schneiden in kritischen Bereichen erforderlich ist. Hierfür können auch Daten der Steuerung für das jeweils auszuschneidende Werkstück mit seiner zu schneidenden Kontur berücksichtigt werden. Dies betrifft auch die angesprochenen kritischen Konturbereiche.

Es wird gemäß der Erfindung eine Steuerung des Führungssystems oder der Plasmaschneidanlage eingesetzt werden, die über eine Datenbank verfügt, in der zumindest für eine Materialart und/oder einen elektrischen Schneidstrom, das Maß und/oder der Zeitpunkt der Auslenkung oder Neigung des Plasmastrahls Daten hinterlegt sind.

In einer solchen Datenbank können die Materialart, die Werkstückdicke, der elektrische Schneidstrom, mit dem der Plasmastrahl betrieben wird und die Vorschubgeschwindigkeit vor dem Schneiden gespeichert werden. Nachfolgend soll die Erfindung beispielhaft näher erläutert werden.

Dabei zeigen:
- Figur 1: Anordnung zum Plasmaschneiden nach dem Stand der Technik;
- Figur 2: eine Konturführung eines Plasmaschneidbrenners;
- Figur 3: ein geschnittenes Werkstück;
- Figur 4: ein geschnittenes Werkstück- Kontur;
- Figur 5: ein geschnittenes Werkstück - Geradschnitt;
- Figur 6: eine Anordnung eines Plasmaschneidbrenners mit Werkstück;
- Figur 7: den Rillennachlauf nach DIN ISO 9013;
- Figur 8.1: ein Foto als Ansicht auf ein geschnittenes Werkstück von oben;
- Figur 8.2: ein Foto als Teilansicht eines geschnittenen Werkstücks;
- Figur 8.3: ein Foto als Teilansicht eines geschnittenen Werkstücks;
- Figur 9: eine Anordnung eines Plasmaschneidbrenners mit Werkstück, bei der ein Plasmastrahl geneigt werden kann und
- Figur 10: eine Anordnung eines Plasmaschneidbrenners mit Werkstück.

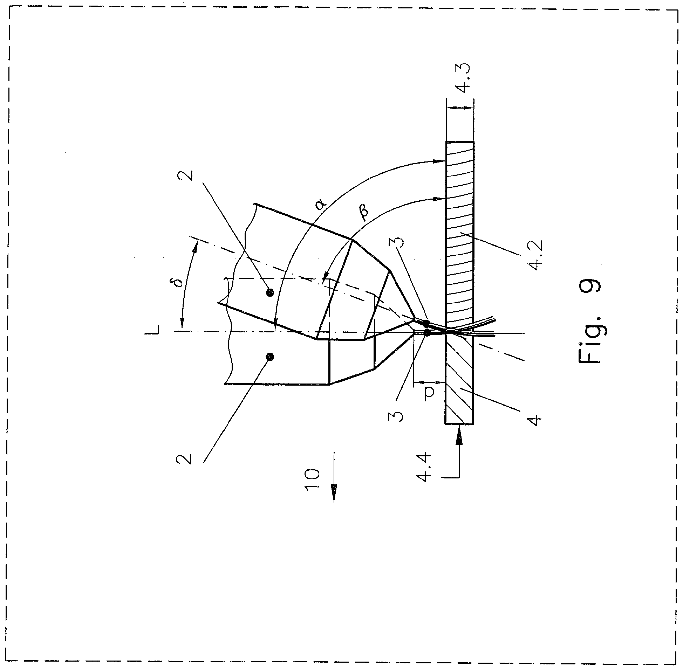

Ein Beispiel zeigt **Fig. 9****.** Hier wird beispielhaft der Plasmaschneidbrenner 2 vor dem Überfahren der Werkstückkante 4.4 aus der beim Schneiden gegenüber der Werkstückoberfläche senkrechten Ausrichtung (α = 90°) um den Winkel δ, z.B. 20° zur Werkstückoberfläche mit der Plasmabrennerspitze in Schneidrichtung 10 geneigt. Damit ergibt sich in diesem Beispiel für den Winkel β ein Wert von 70°. Die Ausrichtung des Plasmaschneidbrenners 2 mit der Plasmabrennerspitze in Vorschubrichtung 10 wird auch stechende Führung genannt. Durch die stechende Führung des Plasmaschneidbrenners 2 wird ein gerades Abschneiden des zu schneidenden Werkstücks 4 erreicht. Der anodische Ansatzpunkt auf dem Werkstück 4"überspringt" das letzte Stück der zu schneidenden Kontur nicht. Die Entstehung des aus der Schnittfläche 4.2 hervorstehenden Bereiches Z wird somit verhindert.

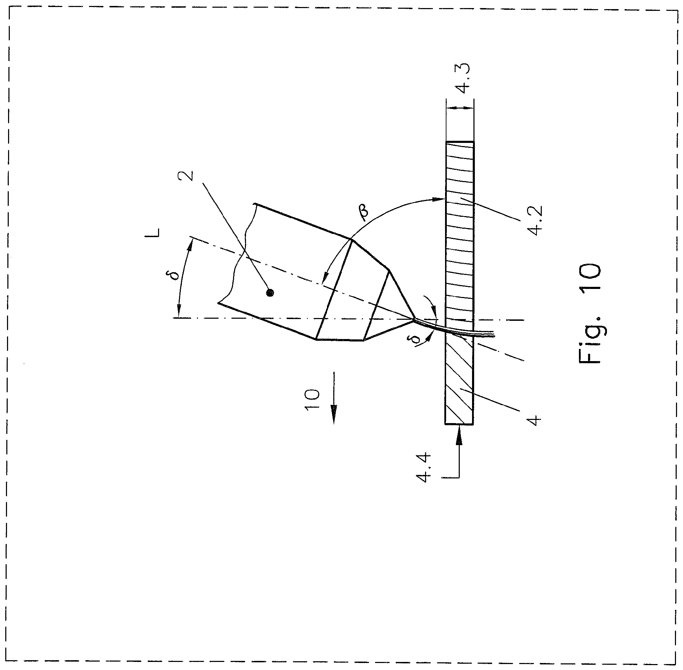

**Fig. 10** zeigt ebenfalls einen Plasmaschneidbrenner 2, der stechend geführt wird. Die Position 3.1, an dem der Plasmastrahl 3 auf die Werkstückoberfläche trifft, befindet sich in Vorschubrichtung 10 hinter der Position 3.2, an dem der Plasmastrahl 3 aus der Werkstückunterseite austritt, liegt. Dies ist besonders vorteilhaft, wenn das zu schneidende Werkstück 4 sicher abgeschnitten werden soll, da es so gewährleistet ist, dass bis zum Überfahren der Werkstückkante 4.4 der anodische Ansatzpunkt des Plasmastrahls 3 auf dem zu schneidenden Teil verbleibt.

Es ist unter Umständen sinnvoll, die Neigung des Plasmaschneidbrenners 2 bis zum erneuten Einstechen (Fig. 2, Abschnitt A) zum Schneiden des nächsten Werkstücks 4 beizubehalten, damit das beim Einstechen aufgeschmolzene hochspritzende Material des Werkstücks 4 nicht gegen die Spitze des Plasmaschneidbrenners 2, z.B. die Düse 2.2 oder die Sekundärgaskappe 2.4 spritzt und diese beschädigt. Der Plasmaschneidbrenner 2 wird spätestens dann, wenn er wieder die Kontur des zu schneidenden Werkstücks 4 (z. B. Fig. 2, Abschnitt B, spätestens an der Position 1) erreicht, senkrecht zur Werkstückoberfläche oder wie es zum Schneiden benötigt wird, ausgerichtet wird.

Die Ablenkung des Plasmastrahls 3 kann auch durch eine geeignete Anordnung magnetisch erfolgen.

Ebenso ist die Verschiebung der Düse 2.2 in Vorschubrichtung 10 gegenüber der Elektrode 2.1 möglich.

Bei kurvenförmiger Vorschubbewegungsrichtung wird der Plasmastrahl 3 tangential zur Vorschubbewegungsrichtung 10 geneigt oder abgelenkt, wobei diese der Vorschubbewegungsrichtung 10 tangential nachgeführt werden kann.

Um eine möglichst einfache Ablenkung oder Ausrichtung des Plasmastrahls 3 zu realisieren, können die Schnittenden der zu schneidenden Teile eines Werkstücks 4 immer in der gleichen Vorschubbewegungsrichtung 10 liegen. So muss die Ablenkung des Plasmastahls 3 vor der Werkstückkante 4.4 nur in eine Richtung erfolgen. Dies verringert den Steuerungsaufwand erheblich.

## Patentansprüche

1. Verfahren zum Plasmaschneiden von Werkstücken, bei dem ein Plasmaschneidbrenner (2) mit zumindest einem Brennerkörper (2.6), einer Elektrode (2.1) und einer Düse (2.2), eingesetzt wird, bei dem der Plasmastrahl (3) zumindest vor dem Überfahren einer Werkstückkante (4.4) in einem Winkel δ in Bezug zur senkrecht zur Werkstückoberfläche ausgerichteten Achse geneigt oder so abgelenkt wird, so dass die Austrittsposition des Plasmastrahls (3) aus dem Werkstück (4) in Vorschubbewegungsrichtung (10) in einem maximal halb so großen Abstand angeordnet ist, als dies bei senkrecht zur Werkstückoberfläche auftreffendem Plasmastrahl (3) der Fall ist, **dadurch gekennzeichnet, dass** die Neigung oder Auslenkung des Plasmastrahls (3) vor dem Überfahren einer Werkstückkante (4.4) spätestens dann durchgeführt wird, wenn der Eintrittspunkt des Plasmastrahls (3) in die Werkstückoberfläche, die Position erreicht hat, bei der der Abstand zur Werkstückkante (4.4) 25% des Maßes der Werkstückdicke (4.3) entspricht und
eine Steuerung des Führungssystems oder der Plasmaschneidanlage eingesetzt wird, die über eine Datenbank verfügt, in der zumindest für eine Materialart und/oder einen elektrischen Schneidstrom, das Maß und/oder der Zeitpunkt der Auslenkung oder Neigung des Plasmastrahls (3) hinterlegt ist.

2. Verfahren nach Anspruch 1, **dadurch gekennzeichnet, dass** der Plasmastrahl (3) so geneigt oder ausgelenkt wird, dass seine Austrittsposition aus dem Werkstück in Vorschubbewegungsrichtung zumindest in der Achse in der auch die Auftreffposition des Plasmastrahls (3) auf der Werkstückoberfläche angeordnet ist, bevorzugt in Vorschubachsrichtung davor angeordnet ist.

3. Verfahren nach Anspruch 1, **dadurch gekennzeichnet, dass** bei der Ablenkung oder Neigung des Plasmastrahls (3) in Bezug zur Werkstückoberfläche ein Winkel δ von mindestens 5° bis maximal 45° in Vorschubbewegungsrichtung (10) des Plasmaschneidbrenners (2) eingehalten wird.

4. Verfahren nach einem der vorhergehenden Ansprüche, **dadurch gekennzeichnet, dass** die Auslenkung oder Neigung des Plasmastrahls (3) beim Schneiden von Konturen frühestens während oder nach der letzten Vorschubbewegungsrichtungsänderung, insbesondere nach Ausbildung einer Ecke oder Ausbildung eines Radius, durchgeführt wird.

5. Verfahren nach einem der vorhergehenden Ansprüche, **dadurch gekennzeichnet, dass** die Auslenkung oder Neigung des Plasmastrahls (3) zumindest bis zum Passieren der Werkstückkante (4.4) und beim Überfahren einer Schnittfuge, bevorzugt frühestens an der Position, an der der Plasmastrahl (3) das Werkstück (4) berührt, durchgeführt wird, die einen Abstand zur Werkstückkante (4.4) von 25% des Maßes der Werkstückdicke (4.3) hat oder der Schneidlichtbogen erloschen ist.

6. Verfahren nach Anspruch 1 **dadurch gekennzeichnet, dass** der Plasmastrahl (3) um mindestens die Hälfte des Maßes des größten Abstandes n zweier Punkte einer Rille b (Rillennachlauf) in Vorschubbewegungsrichtung (10), bevorzugt um das Maß des größten Abstandes n zweier Punkte einer Rille b (Rillennachlauf) geneigt oder abgelenkt wird.

7. Verfahren nach einem der vorhergehenden Ansprüche, **dadurch gekennzeichnet, dass** die Neigung des Plasmastrahls (3) durch Neigung der Längsachse der Düsenbohrung (2.2.1), der Düse (2.2) des Plasmaschneidbrenners (2) oder bevorzugt durch Neigung des gesamten Plasmaschneidbrenners (2) erreicht wird.

8. Verfahren nach Anspruch 7, **dadurch gekennzeichnet, dass** die Neigung des Plasmaschneidbrenners (2), um einen Punkt des Plasmastrahls (3) zwischen der Spitze des Plasmaschneidbrenners (2) und der Position an der dieser auf die Oberfläche des Werkstücks(4) trifft, durchgeführt wird.

9. Verfahren nach Anspruch 7, **dadurch gekennzeichnet, dass** die Neigung des Plasmaschneidbrenners (2), um die Position/den Punkt, an dem der Plasmastrahl (3) auf die Oberfläche des Werkstücks 4 trifft, durchgeführt wird.

10. Verfahren nach Anspruch 1 und Anspruch 6, **dadurch gekennzeichnet, dass** die Neigung des Plasmastrahls (3) durch Verschiebung der Düse (2.2) und/oder der Düsenbohrung (2.2.1) gegenüber der Elektrode (2.1) und/oder dem Emissionseinsatz (2.1.2) in Vorschubbewegungsrichtung (10) des Plasmaschneidbrenners (2) erreicht wird.

11. Verfahren nach Anspruch 1 und Anspruch 6, **dadurch gekennzeichnet**, die Ablenkung des Plasmastrahls (3) durch magnetische Ablenkung des Plasmastrahls (3) erreicht wird.

12. Verfahren nach Anspruch 1, **dadurch gekennzeichnet, dass** ein Signal, dass der Plasmastrahl (3) in Vorschubbewegungsrichtung (10) des Plasmaschneidbrenners (2) zur Werkstückoberfläche geneigt oder abgelenkt werden soll, von einem Führungssystem, mit dem der Plasmaschneidbrenner (2) geführt wird und/oder dessen Steuerung bereitgestellt und an eine mechanische Neigungseinheit, den Plasmaschneidbrenner (2) oder eine magnetische Ablenkeinrichtung übertragen wird und dadurch die Neigung oder Ablenkung des Plasmastrahls (3) erreicht wird.

13. Verfahren nach einem der vorhergehenden Ansprüche, **dadurch gekennzeichnet, dass** in der Datenbank die Materialart, die Werkstückdicke, der elektrische Schneidstrom, mit dem der Plasmastrahl (3) betrieben wird und die Vorschubgeschwindigkeit vor dem Schneiden gespeichert werden.

## Claims

1. A method for the plasma cutting of workpieces, wherein a plasma cutting torch (2) having at least a torch body (2.6), an electrode (2.1) and a nozzle (2.2) is used, wherein the plasma jet (3) is inclined or deflected at least before the traveling over of a workpiece edge (4.4) at an angle δ with respect to the axis aligned perpendicular to the workpiece surface such that the emission position of the plasma jet (3) from the workpiece (4) is arranged at a spacing in the feed movement direction (10) which is at most half the amount than is the case with a plasma jet (3) incident perpendicular on the workpiece surface, **characterized in that**
the inclination or deflection of the plasma jet (3) is carried out before the traveling over of a workpiece edge (4.4) at the latest when the entry point of the plasma jet (3) into the workpiece surface has reached the position at which the spacing from the workpiece edge (4.4) corresponds to 25% of the dimension of the workpiece thickness (4.3) and a control of the guide system or of the plasma cutting system is used which has a database in which the degree and/or the time of the deflection or inclination of the plasma jet (3) is stored at least for one material type and/or for one electrical cutting current.

2. A method in accordance with claim 1, **characterized in that** the plasma jet (3) is inclined or deflected such that its emission position from the workpiece in the feed movement direction is arranged at least at the axis at which the position of incidence of the plasma jet (3) on the workpiece surface is arranged, is preferably arranged upstream in the axis of the feed direction.

3. A method in accordance with claim 1, **characterized in that** an angle δ of at least 5° up to a maximum of 45° is observed in the feed movement direction (10) of the plasma cutting torch (2) on a deflection or inclination of the plasma jet (3) with respect to the workpiece surface.

4. A method in accordance with one of the preceding claims, **characterized in that** the deflection or inclination of the plasma jet (3) in the cutting of contours is carried out at the earliest during or after the last change in the feed movement direction, in particular after formation of a corner or formation of a radius.

5. A method in accordance with one of the preceding claims, **characterized in that** the deflection or inclination of the plasma jet (3) is carried out at least up to the passing through of the workpiece edge (4.4) and on the traveling over of a kerf, preferably at the earliest at the position at which the plasma jet (3) contacts the workpiece (4) which has a spacing from the workpiece edge (4.4) of 25% of the dimension of the workpiece thickness (4.3) or the cutting arc has extinguished.

6. A method in accordance with claim 1, **characterized in that** the plasma jet (3) is inclined or deflected by at least half the dimension of the largest spacing n of two points of a groove b (groove lag) in the feed movement direction (10), preferably by the measure of the largest spacing n of two points of a groove b (groove lag).

7. A method in accordance with one of the preceding claims, **characterized in that** the inclination of the plasma jet (3) is achieved by inclination of the longitudinal axis of the nozzle bore (2.2.1), of the nozzle (2.2) of the plasma cutting torch (2), or preferably by inclination of the total plasma cutting torch (2).

8. A method in accordance with claim 7, **characterized in that** the inclination of the plasma cutting torch (2) is carried out about data are stored a point of the plasma jet (3) between the tip of the plasma cutting torch (2) and the position at which it is incident on the surface of the workpiece (4).

9. A method in accordance with claim 7, **characterized in that** the inclination of the plasma cutting torch (2) is carried out about the position/the point at which the plasma jet (3) is incident on the surface of the workpiece (4).

10. A method in accordance with claim 1 and with claim 6, **characterized in that** the inclination of the plasma jet (3) is achieved by displacement of the nozzle (2.2) and/or of the nozzle bore (2.2.1) with respect to the electrode (2.1) and/or with respect to the emission insert (2.1.2) in the feed movement direction (10) of the plasma cutting torch (2).

11. A method in accordance with claim 1 and claim 6, **characterized in that** the deflection of the plasma jet (3) is achieved by magnetic deflection of the plasma jet (3).

12. A method in accordance with claim 1, **characterized in that** a signal that the plasma jet (3) is to be inclined or deflected in the feed movement direction (10) of the plasma cutting torch (2) toward the workpiece surface is achieved by a guide system with which the plasma cutting torch (2) is guided and/or whose control is provided and is transmitted to a mechanical inclination unit, to the plasma cutting torch (2) or to a magnetic deflection device and the inclination or deflection of the plasma jet (3) is thereby achieved.

13. A method in accordance with one of the preceding claims, **characterized in that** the material type, the workpiece thickness, the electrical cutting current at which the plasma jet (3) is operated and the feed speed before the cutting are stored in the database.

## Revendications

1. Procédé de découpe au plasma de pièces, dans lequel un chalumeau de découpe au plasma (2) avec au moins un corps de chalumeau (2.6), une électrode (2.1) et une buse (2.2), est utilisé, dans lequel le jet de plasma (3) est incliné, au moins avant le survol de l'arête d'une pièce (4.4) avec un angle δ par rapport à un axe perpendiculaire à la surface de la pièce ou est dévié de façon à ce que la position de sortie du jet de plasma (3) hors de la pièce (4) soit disposée, dans la direction du mouvement d'avance (10), à une distance représentant au maximum la moitié de celle qui est parcourue lorsque le jet de plasma (3) arrive perpendiculairement à la surface de la pièce, **caractérisé en ce que** l'inclinaison ou la déviation du jet de plasma (3) est effectuée avant le survol de l'arête d'une pièce (4.4) au plus tard lorsque le point d'entrée du jet de plasma (3) à la surface de la pièce a atteint la position à laquelle la distance par rapport à l'arête de la pièce (4.4) correspond à 25 % de l'épaisseur de la pièce (4.3) et une commande du système de guidage ou de l'installation de découpe au plasma est utilisée, qui dispose d'une base de données où sont enregistrés, au moins pour un type de matériau et/ou un courant de découpe électrique, l'étendue et/ou le moment de la déviation ou de l'inclinaison du jet de plasma (3).

2. Procédé selon la revendication 1, **caractérisé en ce que** le jet de plasma (3) est incliné ou dévié de façon à ce que sa position de sortie hors de la pièce est disposé, dans la direction du mouvement d'avance, au moins dans l'axe dans lequel se trouve également la position d'incidence du jet de plasma (3) à la surface de la pièce, de préférence avant dans la direction axiale d'avance.

3. Procédé selon la revendication 1, **caractérisé en ce que**, lors de la déviation ou de l'inclinaison du jet de plasma (3) par rapport à la surface de la pièce, un angle δ d'au moins 5° à 45° maximum est respecté dans la direction du mouvement d'avance (10) du chalumeau de découpe au plasma (2).

4. Procédé selon l'une des revendications précédentes, **caractérisé en ce que** la déviation ou l'inclinaison du jet de plasma (3) est effectuée lors de la découpe de contours, au plus tôt pendant ou après le dernier changement de direction du mouvement d'avance, plus particulièrement après la formation d'un coin ou la formation d'un rayon.

5. Procédé selon l'une des revendications précédentes, **caractérisé en ce que** la déviation ou l'inclinaison du jet de plasma (3) est effectuée, au moins jusqu'au passage de l'arête de la pièce (4.4) ou lors du survol d'un trait de coupe, de préférence au plus tôt au niveau de la position à laquelle le jet de plasma (3) entre en contact avec la pièce (4), et qui présente une distance par rapport à l'arête de la pièce (4.4) représentant 25 % de l'épaisseur de la pièce (4.3) ou à laquelle l'arc électrique de coupe s'est éteint.

6. Procédé selon la revendication 1, **caractérisé en ce que** le jet de plasma (3) est incliné ou dévié d'au moins la moitié de la distance n la plus grande entre deux points d'une rainure b (décalage de rainure) dans la direction du mouvement d'avance (10), de préférence de la distance n la plus grande entre deux points d'une rainure b (décalage de rainure).

7. Procédé selon l'une des revendications précédentes, **caractérisé en ce que** l'inclinaison du jet de plasma (3) est obtenue grâce à l'inclinaison de l'axe longitudinal de l'alésage de buse (2.2.1), de la buse (2.2) du chalumeau de découpe au plasma (2) ou de préférence grâce à l'inclinaison de l'ensemble du chalumeau de découpe au plasma (2).

8. Procédé selon la revendication 7, **caractérisé en ce que** l'inclinaison du chalumeau de découpe au plasma (2) est effectuée autour d'un point du jet de plasma (3) entre la pointe du chalumeau de découpe au plasma (2) et la position à laquelle celui-ci arrive à la surface de la pièce (4).

9. Procédé selon la revendication 7, **caractérisé en ce que** l'inclinaison du chalumeau de découpe au plasma (2) est effectuée autour de la position/du point, auquel le jet de plasma (3) arrive à la surface de la pièce (4).

10. Procédé selon la revendication 1 et la revendication 6, **caractérisé en ce que** l'inclinaison du jet de plasma (3) est obtenue par déplacement de la buse (2.2) et/ou de l'alésage de buse (2.2.1) par rapport à l'électrode (2.1) et/ou de l'insert d'émission (2.1.2) dans la direction du mouvement d'avance (10) du chalumeau de découpe au plasma (2).

11. Procédé selon la revendication 1 et la revendication 6, **caractérisé en ce que** la déviation du jet de plasma (3) est obtenue par une déviation magnétique du jet de plasma (3).

12. Procédé selon la revendication 1, **caractérisé en ce qu'**un signal indiquant que le jet de plasma (3) doit être incliné ou dévié dans la direction du mouvement d'avance (10) du chalumeau de découpe au plasma (2) par rapport à la surface de la pièce est généré par un système de guidage avec lequel le chalumeau de découpe au plasma (2) est guidé et/ou par son dispositif de commande et est transmis à une unité d'inclinaison mécanique, au chalumeau de découpe au plasma (2) ou à un dispositif de déviation magnétique et l'inclinaison ou la déviation du jet de plasma (3) est ainsi obtenue.

13. Procédé selon l'une des revendications précédentes, **caractérisé en ce que**, dans la base de données, sont enregistrés, avant la découpe, le type de matériau, l'épaisseur de la pièce, le courant électrique de découpe, avec lequel le jet de plasma (3) est généré et la vitesse d'avance.
